# EUROPEAN PATENT SPECIFICATION

(11) **EP 2 752 656 B1**
(45) Date of publication and mention of the grant of the patent: **01.01.2020**
(21) Application number: 12829064.0
(22) Date of filing: 30.08.2012
(51) Int. Cl.: G01N 21/65, G01N 21/85

(54) **FLUID COMPOSITION ANALYSIS MECHANISM, CALORIFIC VALUE MEASUREMENT DEVICE, POWER PLANT, AND LIQUID COMPOSITION ANALYSIS METHOD**
MECHANISMUS ZUR ANALYSE EINER FLÜSSIGKEITSZUSAMMENSETZUNG, VORRICHTUNG ZUR BRENNWERTMESSUNG, KRAFTWERK, UND VERFAHREN ZUR ANALYSE EINER FLÜSSIGKEITSZUSAMMENSETZUNG
MÉCANISME D'ANALYSE D'UNE COMPOSITION FLUIDIQUE, DISPOSITIF DE MESURE DE VALEUR CALORIFIQUE, CENTRALE ÉLECTRIQUE, ET PROCÉDÉ D'ANALYSE D'UNE COMPOSITION LIQUIDE

(30) Priority: 01.09.2011 JP 2011190702; 29.05.2012 WO PCT/JP2012/063784
(43) Date of publication of application: 09.07.2014
(73) Proprietor: Mitsubishi Hitachi Power Systems, Ltd., Yokohama 220-8401 (JP)
(72) Inventor: DEGUCHI Yoshihiro, Tokushima-shi Tokushima 770-8501 (JP); KITAUCHI Yosuke, Tokyo 108-8215 (JP); INADA Mitsuru, Tokyo 108-8215 (JP)
(74) Representative: Mader, Joachim
(86) International application number: PCT/JP2012/072015
(87) International publication number: WO 2013/031896

(56) References cited:
- EP-A1- 0 242 926
- EP-A2- 0 756 169
- JP-A- S6 244 649
- JP-A- H08 320 285
- JP-A- H08 320 285
- JP-A- 2000 206 047
- JP-A- 2000 206 047
- JP-A- 2000 501 179
- JP-A- 2002 286 644
- JP-A- 2002 286 644
- JP-A- 2006 275 998
- JP-A- 2011 033 351
- JP-A- 2011 033 351
- JP-A- 2011 080 768
- JP-A- 2011 191 125
- US-A- 5 194 913
- US-A- 6 020 961
- STEINERT R ET AL: "IDENTIFICATION OF XYLENE ISOMERS IN HIGH-PRESSURE LIQUID CHROMATOGRAPHY ELUATES BY RAMAN SPECTROSCOPY", APPLIED SPECTROSCOPY, THE SOCIETY FOR APPLIED SPECTROSCOPY. BALTIMORE, US, vol. 51, no. 11, 1 November 1997 (1997-11-01), pages 1644-1647, XP000774864, ISSN: 0003-7028, DOI: 10.1366/0003702971939307
- Richard L. Mccreery: "SAMPLING MODES IN RAMAN SPECTROSCOPY" In: "Raman Spectroscopy for Chemical Analysis", 1 September 2000 (2000-09-01), John Wiley & Sons, Inc., Hoboken, NJ, USA, XP055177112, ISBN: 978-0-47-125287-0 pages 95-125, DOI: 10.1002/0471721646, * page 102, line 104 *

## Description

### BACKGROUND OF THE INVENTION

### Field of the Invention

The present invention relates to a fluid composition analysis mechanism, a calorific value measurement device, a power plant, and a fluid composition analysis method. More particularly, the present invention relates to noise rejection when a composition and a calorific value of a fuel gas supplied to a gas turbine are measured.

### Description of Related Art

In general, in a gas-fired power plant in which a fuel gas, which is mainly a low calorific value gas, such as a BFG (Blast Furnace Gas), is burned by a combustor of a gas turbine, the BFG has a low calorific value. For this reason, a fuel gas in which a gas having a higher calorific value than the BFG, such as a COG (Cokes Oven Gas), is mixed to increase a calorific value on the order of for example 1000 kcal/m³N has been used.

In the fuel gas guided to the combustor, a low calorific value gas and a high calorific value gas are mixed. For this reason, when a mixing ratio of the low calorific value gas and the high calorific value gas is changed, a property of the combustor or an output of the fuel gas is likely to be changed. In order to suppress the change in the property of the combustor or the output of the gas turbine, the calorific value of the low calorific value gas is measured before the low calorific value gas is supplied to the combustor. According to the measurement result of the calorific value, a flow rate of the high calorific value gas is controlled and the calorific value of the fuel gas supplied to the combustor is controlled. There are a combustion-type method and a method using Raman scattering light disclosed in Japanese Unexamined Patent Application, First Publication No. 2002-286644 and Japanese Unexamined Patent Application, First Publication No. 2005-24250 to measure such a calorific value. A gas analyzer for analyzing the gas component of the fuel gas is e.g. disclosed in JP 2011 033 351.

In a combustion-type calorific value measurement device, a fuel gas is sampled and burned using a burner, and a difference between a temperature of the combustion gas and a temperature of combustion air in an entrance of the burner is used to measure a calorific value. For this reason, time is required for processes before measurement, such as gas sampling or dehumidification. Further, a response of the device at the time of measurement is relatively slow, in the order of minutes. Accordingly, the device is not suitable for rapid control of the calorific value of the fuel gas supplied to the gas turbine.

In a calorific value measurement device of the type using Raman scattering light disclosed in Japanese Unexamined Patent Application, First Publication No. 2002-286644 and Japanese Unexamined Patent Application, First Publication No. 2005-24250, the response of the device at the time of measurement is relatively fast. Accordingly, the device can be applied to rapid control of the calorific value of the fuel gas supplied to the gas turbine.

However, with the inventions disclosed in Japanese Unexamined Patent Application, First Publication No. 2002-286644 and Japanese Unexamined Patent Application, First Publication No.2005-24250, it is not possible to measure the Raman scattering light with a sufficient SN ratio. As a result, a measurement time is likely to take several tens of seconds. More specifically, excitation light is generally incident on a fuel gas via a measurement window. This measurement window is often contaminated by foreign matter such as soot contained in the fuel gas. In this case, noise light is generated by the excitation light irradiating the foreign matter attached to the measurement window. Also, as this noise light is incident on a detector, a weak Raman scattering light cannot be measured with a high SN ratio and the measurement takes a long time. In principle, when an intensity of incident excitation light increases, signal intensity also increases. However, a device cost becomes higher and noise increases. Accordingly, it is not realistic in practice.

### SUMMARY OF THE INVENTION

The present invention has been made in view of the circumstances described above, and an object of the present invention is to provide a fluid composition analysis mechanism, a calorific value measurement device, and a gas-fired power plant having the same that are capable of increasing operation reliability and reducing an operation cost in the gas-fired power plant by rapidly measuring a calorific value of a fuel gas supplied to a combustor.

In order to achieve the above object, the current invention provides a fluid composition analysis apparatus according to claim 1, a calorific value measurement device according to claim 6 and a gas-fired power plant according to claim 7. Further embodiments are disclosed in the dependent claims.

A fluid composition analysis mechanism according to a first aspect of the present invention includes: a light source configured to apply excitation light to a sample fluid at a measurement position; a light receiving unit configured to receive and disperse a Raman scattering light generated from the sample fluid irradiated with the excitation light; a Raman scattering light collection optical system arranged on an optical path of the excitation light or on an extended line of the excitation light, and configured to collect the Raman scattering light generated at the measurement position and to cause the Raman scattering light to be incident on the light receiving unit; a calculation unit configured to calculate a composition of the sample fluid based on an output of the light receiving unit; and a light shielding member arranged on the optical path of the excitation light or on the extended line of the excitation light.

A fluid composition analysis mechanism according to a second aspect of the present invention includes: a light source configured to apply excitation light to a sample fluid at a measurement position; a light receiving unit arranged on an extended line of the excitation light, and configured to receive and disperse Raman scattering light generated from the sample fluid irradiated with the excitation light; a Raman scattering light collection optical system arranged on an optical path of the excitation light or on the extended line of the excitation light, and configured to collect the Raman scattering light generated at the measurement position and to cause the Raman scattering light to be incident on the light receiving unit; a calculation unit configured to calculate a composition of the sample fluid based on an output of the light receiving unit; and a light shielding member arranged on the optical path of the excitation light or on the extended line of the excitation light.

According to these configurations, when the excitation light is incident on the sample fluid, Raman scattering light having different wavelengths according to components in the sample fluid is generated. The components in the sample fluid can be known from the wavelengths dispersed from the Raman scattering light. Also, it is possible to obtain the composition of the sample fluid based on the dispersing wavelengths and calculate the calorific value from the composition of the sample fluid.

In the fluid composition analysis mechanism according to the first and second aspects of the present invention, the Raman scattering light collection optical system is arranged on the optical path of the excitation light or on the extended line of the excitation light. This Raman scattering light collection optical system collects the Raman scattering light generated at the measurement position and cause the Raman scattering light to be incident on the light receiving unit. The Raman scattering light has an intensity distribution in which the intensity is strong in a direction parallel to a traveling direction of the excitation light and weak in a direction perpendicular to the traveling direction. Thus, it is possible to increase the intensity of the Raman scattering light guided to the light receiving unit by providing the Raman scattering light collection optical system in the direction in which the intensity of the Raman scattering light is high.

Further, in the fluid composition analysis mechanism according to the first and second aspects of the present invention, the light shielding member is arranged on the optical path of the excitation light or on the extended line of the excitation light. Noise light that obstructs measurement of the Raman scattering light is mainly generated from a substance irradiated with excitation light. It is possible to effectively prevent noise light generated on the optical path of the excitation light from reaching the light receiving unit via the Raman scattering light collection optical system by arranging the light shielding member on the optical path of the excitation light or on the extended line of the excitation light. As a result, it is possible to measure the Raman scattering light with a high SN ratio and calculate the composition and the calorific value of the sample fluid with a high response.

The fluid composition analysis mechanism may further include: a first measurement window arranged on the optical path of the excitation light and configured to guide the excitation light to an area in which the sample fluid flows; and a second measurement window arranged on the optical path of the excitation light or on the extended line of the excitation light and configured to guide the Raman scattering light generated at the measurement position to the Raman scattering light collection optical system arranged outside the area in which the sample fluid flows. The light shielding member may include: a first light shielding member arranged on the side of the light receiving unit with respect to a surface of the second measurement window exposed to the sample fluid; and a second light shielding member arranged on the side of the light receiving unit with respect to the first light shielding member and configured to have an outline coinciding with the first light shielding member when viewed from the measurement position.

According to this configuration, noise light is generated from a position which is on the surfaces of the first measurement window and the second measurement window exposed to the sample fluid, and which is a position irradiated with the excitation light. Also, since the noise light is effectively cut by the first light shielding member provided in the vicinity of the second measurement window, it is possible to measure the Raman scattering light with a high SN ratio. Further, since the second light shielding member configured to have an outline coinciding with the first light shielding member when viewed from the measurement position is provided, the Raman scattering light can be measured with a higher SN ratio. More specifically, the second light shielding member has an outline coinciding with the first light shielding member when viewed from the measurement position. Accordingly, the second light shielding member does not shield the Raman scattering light generated from the measurement position more than the first light shielding member shields the Raman scattering light generated from the measurement position. As a result, more noise light can be cut without degrading the signal intensity of the Raman scattering light, and thus it is possible to measure the Raman scattering light with a higher SN ratio.

The fluid composition analysis mechanism may further include: a first measurement window arranged on the optical path of the excitation light and configured to guide the excitation light to an area in which the sample fluid flows; and a second measurement window arranged on the optical path of the excitation light or on the extended line of the excitation light and configured to guide the Raman scattering light generated at the measurement position to the Raman scattering light collection optical system arranged outside the area in which the sample fluid flows. The light shielding member may include a first light shielding member arranged on the side of the light receiving unit with respect to a surface of the second measurement window exposed to the sample fluid; and a second light shielding member arranged between the first measurement window and the second measurement window and configured to shield portions other than the optical path of the excitation light.

According to this configuration, noise light is generated from a position which is on the surfaces of the first measurement window and the second measurement window exposed to the sample fluid, and which is a position irradiated with the excitation light. Since the noise light is effectively cut by the first light shielding member provided in the vicinity of the second measurement window, it is possible to measure the Raman scattering light with a high SN ratio. Further, since the second light shielding member arranged between the first measurement window and the second measurement window for shielding portions other than the optical path of the excitation light is provided, it is possible to measure the Raman scattering light with a higher SN ratio. More specifically, since the second light shielding member does not shield the optical path of the excitation light, the second light shielding member does not obstruct generation of the Raman scattering light. In addition, the second light shielding member is capable of effectively preventing noise light generated from a position, which is on the surface of the first measurement window exposed to the sample fluid, and is a position irradiated with the excitation light, from being incident on the light receiving unit. Thus, since the noise light is cut without degrading the signal intensity of the Raman scattering light, it is possible to measure the Raman scattering light with a higher SN ratio.

The fluid composition analysis mechanism may further include: a first measurement window arranged on the optical path of the excitation light and configured to guide the excitation light to an area in which the sample fluid flows; a second measurement window arranged on the optical path of the excitation light or on the extended line of the excitation light and configured to guide the Raman scattering light generated at the measurement position to the Raman scattering light collection optical system arranged outside the area in which the sample fluid flows, and a supply means configured to inject the sample fluid so as to have a potential core part including the measurement position between the first measurement window and the second measurement window. A width of the potential core part on the optical path may include a depth of field that is a range on the optical path of the excitation light including the measurement position, the range being a range in which all light passing through the Raman scattering light collection optical system among light emitted from the range is geometric-optically incident on the light receiving unit.

Most of the Raman scattering light incident on the light receiving unit is emitted in the depth of field. According to this configuration, since the range of the depth of field is included in the potential core part of a jet, measurement of a composition of the fluid changed due to mixture in the shear layer can be avoided. Accordingly, it is possible to measure and calculate the calorific value of the fuel gas supplied to the gas turbine with a high response. Further, it is possible to obtain a small and inexpensive measurement device. Further, since an influence of the noise light can be further reduced, it is possible to further improve measurement accuracy of the Raman scattering light.

In the fluid composition analysis mechanism, a focus of the excitation light may be located on the surface of the member contacting the sample fluid.

According to this configuration, it is possible to minimize an area which is on a surface of the member contacting the sample fluid, and which is a portion irradiated with the excitation light. The noise light is mainly generated from the portion irradiated with the excitation light. However, according to this configuration, the area in which the noise light is generated can be reduced. Thus, it is possible to more easily and effectively remove the noise light using the light shielding member and measure the Raman scattering light with a higher SN ratio.

The fluid composition analysis mechanism may include a reflector provided perpendicularly to the optical path of the excitation light on the optical path and configured to reflect the excitation light.

According to this configuration, the excitation light emitted from the light source and the excitation light reflected by the reflector irradiate the sample fluid in the measurement area. Accordingly, it is possible to improve the intensity of the Raman scattering light incident on the light receiving unit. Thus, it is possible to calculate the composition and the calorific value with a high response and high accuracy.

Further, a calorific value measurement device according to a third aspect of the present invention includes the fluid composition analysis mechanism according to the above aspect; and a calorific value calculation mechanism configured to calculate a calorific value of the sample fluid based on information on a composition of the sample fluid output by the fluid composition analysis mechanism.

The fluid composition analysis mechanism according to the above aspects is capable of analyzing the composition of the fluid in a short amount of time. Accordingly, a calorific value measurement device using the same is capable of rapidly calculating the calorific value of the sample fluid.

Furthermore, a power plant according to a fourth aspect of the present invention is a power plant that is operated with a fuel gas as a fuel, the power plant including: the calorific value measurement device; and a control device configured to control operation of the power plant based on information on the calorific value of the fuel gas output by the calorific value measurement device, wherein at least part of the fuel gas is guided as the sample fluid to the calorific value measurement device.

In the calorific value measurement device according to the third aspect of the present invention, it is possible to rapidly measure the calorific value of the fuel gas supplied to the power plant. Thus, according to this configuration, it is possible to rapidly control the calorific value of the fuel gas supplied to the power plant and suppress excessive supply of a high calorific value fuel gas. It is also possible to operate the power plant using only a fuel gas having a low calorific value without using a fuel gas having a high calorific value. Accordingly, it is possible to reduce an operation cost of the power plant.

A fluid composition analysis method according to the fifth aspect of the present invention is a fluid composition analysis method using a fluid composition analysis mechanism including: a light source configured to apply excitation light to a sample fluid at a measurement position; a light receiving unit configured to receive and disperse Raman scattering light generated from the sample fluid irradiated with the excitation light; a Raman scattering light collection optical system arranged on an optical path of the excitation light or on an extended line of the excitation light and configured to collect the Raman scattering light generated at the measurement position and to cause the Raman scattering light to be incident on the light receiving unit; a calculation unit configured to calculate a composition of the sample fluid based on an output of the light receiving unit; and a light shielding member arranged on the optical path of the excitation light or on the extended line of the excitation light, the method comprising: a step of injecting the sample fluid so as to have a potential core part including a depth of field that is a range on the optical path of the excitation light including the measurement position, the range being a range in which all light passing through the Raman scattering light collection optical system among light emitted from the range is geometric-optically incident on the light receiving unit; and a step of applying the excitation light from the light source to an area in which the sample fluid flows and causing the Raman scattering light generated at the measurement position to be incident on the light receiving unit.

In the fluid composition analysis mechanism and the fluid composition analysis method described above, it is possible to increase the intensity of the Raman scattering light guided to the light receiving unit by providing the Raman scattering light collection optical system in a direction in which the intensity of the Raman scattering light is high. It is also possible to effectively prevent the noise light generated on the optical path of the excitation light from reaching the light receiving unit via the Raman scattering light collection optical system by arranging the light shielding member on the optical path of the excitation light or on the extended line of the excitation light. Accordingly, the intensity of the Raman scattering light received by the spectroscopic means can be increased and noise can be reduced. Accordingly, it is possible to calculate the calorific value of the sample fluid with a high response. Thus, it is possible to improve responsiveness of the calorific value measurement device including this fluid composition analysis mechanism.

### Brief Description of the Drawings

FIG. 1 is a schematic configuration diagram showing a gas-fired power plant including a calorific value measurement device according to a first embodiment of the present invention.
FIG. 2 is a schematic configuration diagram of a measurement unit according to the first embodiment of the present invention.
FIG. 3 is a diagram showing optical paths of noise generated from a measurement window in the measurement unit according to the first embodiment of the present invention.
FIG. 4A is a diagram showing a situation in which noise light generated from the measurement window is shielded.
FIG. 4B is a diagram showing a situation in which noise light generated from the measurement window is shielded.
FIG. 4C is a diagram showing a situation in which noise light generated from the measurement window is shielded.
FIG. 5 is a graph showing a relationship between a Raman shift amount of each component and a laser wavelength or a Raman scattering light wavelength.
FIG. 6 is a graph showing a relationship with signal intensity (including Raman scattering light and noise) according to presence or absence of light shielding members related to an embodiment of the present invention.
FIG. 7 is a graph showing a relationship between Raman scattering light intensity of each component and a wavelength of each component.
FIG. 8A is a configuration diagram in which an incidence direction of Raman scattering light is changed in a modified example of the first embodiment of the present invention.
FIG. 8B is a configuration diagram in which an incidence direction and an optical path length of Raman scattering light are changed in a modified example of the first embodiment of the present invention.
FIG. 9 is a configuration diagram in which a light shielding member is arranged between two measurement windows of an excitation light incident unit and a reflection unit in a measurement unit according to a second embodiment of the present invention.
FIG. 10 is a schematic configuration diagram of a measurement unit according to a third embodiment of the present invention.
FIG. 11 is a graph showing a relationship between a position of a measurement point and a light collection rate of Raman scattering light in a light receiving unit.
FIG. 12 is a schematic diagram showing a relationship between a range of a depth of field and a light collection rate of Raman scattering light in the light receiving unit.
FIG. 13 is a graph showing a relationship between a distance between a first measurement window and a second measurement window and a relative intensity of noise light.

### Preferred Embodiments

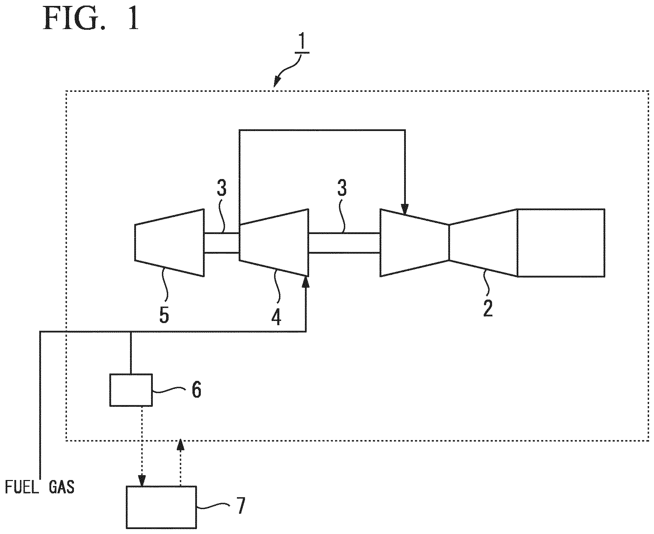

FIG. 1 is a schematic configuration diagram showing an example of a gas-fired power plant including a calorific value measurement device according to a first embodiment of the present invention.

As shown in FIG. 1, a BFG-fired combined cycle power plant (a gas-fired power plant) 1 includes a gas turbine 2 for performing rotational driving by burning a fuel gas, a gas compressor 4 for compressing the fuel gas, a steam turbine 5 rotationally driven by steam, a generator (not shown) for generating electricity, and a calorific value measurement device 6 configured to measure a calorific value of the fuel gas.

In the embodiment, a description will be given using a single-shaft BFG-fired combined cycle power plant as an example. However, the embodiment of the present invention is not limited to the single-shaft combined cycle power plant and may be applied to a gas turbine single cycle power plant or a two-shaft or a multi-shaft power plant.

The calorific value measurement device 6 is a device configured to measure the calorific value of the fuel gas (a sample fluid) using Raman scattering light. Information on the calorific value obtained by the calorific value measurement device 6 is input to a control device 7. The control device 7 controls operation of the BFG-fired combined cycle power plant 1 based on this information. On the other hand, the fuel gas whose calorific value has been measured by the calorific value measurement device 6 is guided to the gas compressor 4.

The gas compressor 4 is an apparatus for compressing the fuel gas. A rotational shaft 3 is connected to the gas compressor 4. The rotational shaft 3 is connected to the gas turbine 2 and the steam turbine 5 via a gearing, which is not shown.

The fuel gas compressed by the gas compressor 4 is guided to the gas turbine 2.

The gas turbine 2 includes an air compressor, a combustor and a turbine, which are not shown. The air compressor sends high-pressure air to the combustor. The combustor generates a combustion gas by burning the mixture of high-pressure air and the fuel gas. The turbine is provided coaxially with the air compressor and converts energy of the combustion gas discharged from the combustor into rotational energy. Part of this rotational energy is used for the air compressor to produce the high-pressure air, and the remaining energy is used to rotationally drive the rotational shaft 3.

The generator is connected to an end of the rotational shaft 3. Therefore, the generator generates electricity by the turbine rotating the rotational shaft 3. Further, the rotation of the rotational shaft 3 rotationally drives the gas compressor 4 via the gearing as described above.

The combustion gas passing through the turbine is guided to an exhaust gas recovery boiler (not shown). The exhaust gas recovery boiler is an apparatus configured to generate steam by means of heat of the combustion gas guided from the gas turbine 2. The combustion gas used for generating the steam in the exhaust gas recovery boiler is discharged from a chimney (not shown) to the outside of the combined cycle power plant 1.

In the exhaust gas recovery boiler, the steam generated by a high-temperature combustion gas guided from the gas turbine 2 is supplied to the steam turbine 5. The steam turbine 5 is connected to the same rotational shaft 3 as the gas turbine 2, and constitutes a so-called single-shaft combined system. Further, the combined system is not limited to the single-shaft combined system, but may be a separate-shaft combined system.

The driving force of the rotational shaft 3 rotationally driven by the turbine is increased by the steam turbine 5. Accordingly, a power generation amount of the generator to which the rotational shaft 3 is connected increases. The gas compressor 4 is rotationally driven via the gearing connected to the rotational shaft 3.

The steam that has rotationally driven the steam turbine 5 is guided to a steam condenser (not shown). The steam that has rotationally driven the steam turbine 5 is cooled and returned to water by the steam condenser. The water returned by the steam condenser is guided to the exhaust gas recovery boiler.

Next, the calorific value measurement device according to the first embodiment of the present invention will be described.

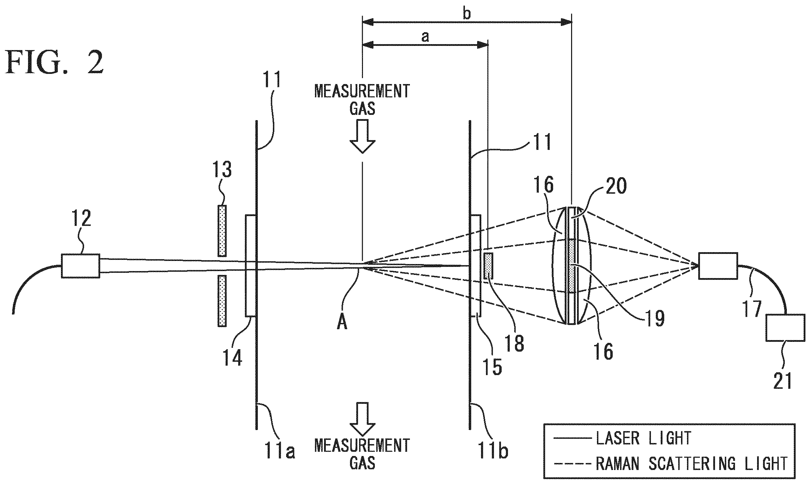

FIG. 2 shows an example of a schematic configuration diagram of a measurement unit. The measurement unit is a device configured to measure a composition and a calorific value of the fuel gas using the Raman scattering light.

The measurement unit includes a casing 11 for introduction of a measurement gas (a fuel gas). In the casing 11, an inlet through which the fuel gas is introduced and an outlet through which the fuel gas passing through a measurement area is derived from the casing 11 are opened. Further, the measurement unit includes a light transmitting optical fiber 12 (a light source) for causing excitation light having a certain wavelength to be incident on the fuel gas in the measurement area of the casing 11.

A first measurement window 14 through which the excitation light passes is provided coaxially with the excitation light on a sidewall 11a of the casing 11 on the side on which the light transmitting optical fiber 12 is provided. Further, a diaphragm 13 that passes the excitation light is provided coaxially with the excitation light between the light transmitting optical fiber 12 and the first measurement window 14.

A second measurement window 15 is provided coaxially with and perpendicularly to the excitation light on a sidewall 11b opposite to the sidewall 11a of the casing 11 on the side on which the light transmitting optical fiber 12 is provided. The second measurement window 15 has a property that reflects the excitation light and transmits the Raman scattering light. Further, the second measurement window 15 vertically reflects the incident excitation light into the casing 11 by the light transmitting optical fiber 12, and transmits the Raman scattering light. Further, a light receiving optical fiber 17 (a light receiving unit) for receiving the Raman scattering light is provided coaxially with an extended line of the excitation light on the extended line of the excitation light.

Further, a condenser lens 16 (a Raman scattering light collection optical system) including two plano-convex lenses is provided coaxially with the extended line of the excitation light between the second measurement window 15 and the light receiving optical fiber 17. Also, Raman scattering light from a measurement point A, which is in a space sandwiched between the two measurement windows 14 and 15 and is a position irradiated with the excitation light, is collected on the light receiving optical fiber 17 (a measurement position; a point on an optical path of the excitation light, which is an image point of the condenser lens 16 when the light-receiving surface of the light receiving optical fiber 17 is an object point). (As will be described later, to be precise, the condenser lens 16 does not collect only the Raman scattering light from the measurement point A on the light receiving optical fiber 17. Raman scattering light generated near the measurement point A on the optical path of the excitation light is also collected on the light receiving optical fiber 17 with a certain percentage. However, for convenience of the description, the Raman scattering light from the measurement point A will first be discussed.) This condenser lens 16 includes a filter 20 configured to transmit only a wavelength of the Raman scattering light.

A spectral calculation means 21 (a calculation unit) is connected to the light receiving optical fiber 17. The spectral calculation means 21 disperses the Raman scattering light detected by the light receiving optical fiber 17 and calculates a composition and a calorific value of the fuel gas from Raman scattering light intensities of respective components.

A first light shielding member 18 (a light shielding member) is provided outside the second measurement window 15. A second light shielding member 19 is provided inside the condenser lens 16. The first light shielding member 18 and the second light shielding member 19 have circular shapes, are arranged coaxially with the excitation light or the extended line of the excitation light and have a function of not transmitting light in areas in which the light shielding members are installed. Further, the first light shielding member 18 and the second light shielding member 19 are arranged to have the same outlines when viewed from the measurement point A. More specifically, it is assumed that a radius of the first light shielding member 18 is R18 and a radius of the second light shielding member 19 is R19. Further, as shown in FIG. 2, when a distance between the measurement point A and the first light shielding member 18 in an incident direction is "a" and a distance between the measurement point A and the second light shielding member 19 in the incident direction is "b", a relationship of R18/R19 = a/b is satisfied. That is, the second light shielding member 19 has a larger radius than the first light shielding member 18. For example, when the radius of the first light shielding member 18 is 5 mm, the distance "a" is 50 mm, and when the distance "b" is 100 mm, the radius of the second light shielding member 19 is 10 mm.

Next, operation of the calorific value measurement device according to the first embodiment of the present invention will be described.

A step of measuring the calorific value of the fuel gas in the calorific value measurement device according to the first embodiment of the present invention will be described. First, the inlet and the outlet provided in the casing 11 are opened, and the fuel gas is introduced as the sample fluid into the measurement area of the casing 11.

Next, excitation light having a certain wavelength is sent by the light transmitting optical fiber 12. The excitation light sent from the light transmitting optical fiber 12 is transmitted through the diaphragm 13 and the measurement window 14 and irradiates the fuel gas introduced into the measurement area of the casing 11, particularly, the fuel gas flowing through the measurement point A. Further, the excitation light reaching the measurement window 15 is vertically reflected in the same direction as the incident direction and irradiates the fuel gas flowing through the measurement point A again. The intensity of the excitation light irradiating the fuel gas flowing through the measurement point A can be increased by this configuration. Accordingly, the intensity of the Raman scattering light generated at the measurement point A can be increased to thereby shorten a time necessary for measurement. As a result, it is possible to calculate the composition and the calorific value of the sample fluid with a high response.

The excitation light incident on the fuel gas in the measurement area from the light transmitting optical fiber 12 causes Raman scattering light having various wavelengths. The Raman scattering light is scattering light that causes a different wavelength according to vibrational energy specific to each component in the fuel gas. Further, the intensity of the Raman scattering light is known to be high in a forward direction of an incident axial direction of the excitation light (hereinafter referred to as "forward Raman scattering light") and a backward direction (hereinafter referred to as "backward Raman scattering light").

The fuel gas at the measurement point A is irradiated with the excitation light from the light transmitting optical fiber 12 and the forward Raman scattering light is generated. Further, the fuel gas at the measurement point A is irradiated with the excitation light reflected by the measurement window 15 and the backward Raman scattering light is generated. The forward Raman scattering light and the backward Raman scattering light transmit the measurement window 15 and are guided to the outside of the casing 11. The Raman scattering light generated from the measurement point A is collected and incident on the light receiving optical fiber 17 by the condenser lens 16 after removal of light other than the Raman scattering light by the filter 20.

The Raman scattering light collected by the condenser lens 16 is guided to the spectral calculation means 21 by the light receiving optical fiber 17, and is dispersed into Raman scattering light having wavelengths according to the components of the fuel gas. Further, the spectral calculation means 21 calculates the composition and the calorific value of the fuel gas from intensities of the dispersed Raman scattering light having the respective wavelengths. A mechanism for calculating the composition and the calorific value of the fuel gas will be described in detail later.

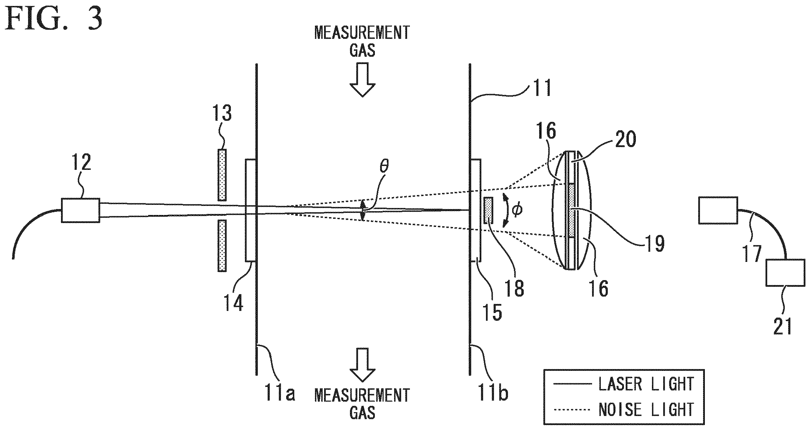

Next, a mechanism for removing noise light generated from the first measurement window 14 and the second measurement window 15 will be described with reference to FIG. 3. When the first measurement window 14 and the second measurement window 15 are contaminated due to, for example, the fuel gas, noise light is generated in excitation light irradiation portions (central portions) in the first measurement window 14 and the second measurement window 15. The Raman scattering light is weak, and measurement accuracy is degraded when the noise light is measured. For this reason, the mechanism for removing the noise light is important in measurement.

The first measurement window 14 is arranged distant from the condenser lens 16 in comparison with the measurement point A. On the other hand, the second measurement window 15 is arranged closer to the condenser lens 16 in comparison with the measurement point A. Because of this, viewing angles of a noise generation portion of the first measurement window 14 and viewing angles of a noise generation portion of the second measurement window 15 are different when viewed from the condenser lens 16. A viewing angle θ from the noise generation portion of the first measurement window 14 is small and a viewing angle φ from the noise generation portion of the second measurement window 15 is great. In the embodiment, since two types: the first light shielding member 18 and the second light shielding member 19, are provided, the noise light from the first measurement window 14 is efficiently removed by the second light shielding member 19. On the other hand, the noise light from the second measurement window 15 is efficiently removed by the first light shielding member 18.

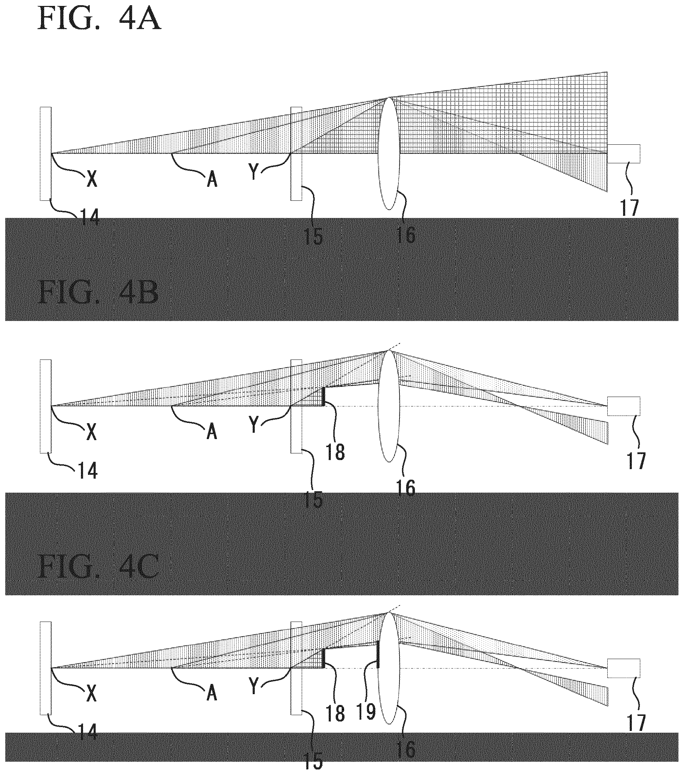

This will be further described with reference to FIGS. 4A to 4C. As shown in FIG. 4A, when the first light shielding member 18 and the second light shielding member 19 are not provided, noise light generated from a position (hereinafter referred to as "noise generation point Y") irradiated with the excitation light on a surface of the second measurement window 15 on the measurement gas side is incident on the condenser lens 16 without being shielded by the light shielding member. Here, the condenser lens 16 is configured to collect the light from the measurement point A on the light receiving optical fiber 17. Accordingly, noise light generated from the noise generation point Y, which is the position closer to the condenser lens 16 in comparison with the measurement point A, is not collected to the light receiving optical fiber 17. However, since noise light at an angle almost parallel to the excitation light among noise light generated from the noise generation point Y passes through the vicinity of an optical axis of the condenser lens 16, an amount of turning due to refraction is small and the noise light is incident on the light receiving optical fiber 17.

Further, noise light generated from a position (hereinafter referred to as "noise generation point X") irradiated with the excitation light on a surface of the first measurement window 14 on the measurement gas side is incident on the condenser lens 16 without being shielded by the light shielding member. Here, the condenser lens 16 is configured to collect the light from the measurement point A on the light receiving optical fiber 17. Accordingly, the noise light generated from the noise generation point X that is distant in comparison with the measurement point A when viewed from the condenser lens 16 is collected in a position between the condenser lens 16 and the light receiving optical fiber 17, and is not collected on the light receiving optical fiber 17. However, since noise light at an angle almost parallel to the excitation light among the noise light generated from the noise generation point X passes through the vicinity of an optical axis of the condenser lens 16, an amount of turning due to refraction is small and the noise light is incident on the light receiving optical fiber 17.

Next, FIG. 4B shows a case in which only the light shielding member 18 is provided. In order to efficiently shield the noise light, the light shielding member may be provided in the vicinity of a position in which the noise light is generated. With this configuration, the noise light irradiating a wide angle range can be removed even by using a small light shielding member. As shown in FIG. 4B, the first light shielding member 18 is provided in the vicinity of the second measurement window 15 on the extended line of the excitation light. Accordingly, noise light from the noise generation point Y located on the surface of the second measurement window 15 at the side of measurement gas can be efficiently shielded with a small area. In particular, the noise light incident on the light receiving optical fiber 17 at an angle almost parallel to the excitation light among the noise light generated from the noise generation point Y is reliably shielded by the first light shielding member 18, thus preventing the noise light from being incident on the light receiving optical fiber 17. Since the noise light is shielded by the first light shielding member 18 having the small area, Raman scattering light that is a measurement target is not greatly shielded by the first light shielding member.

On the other hand, the noise light from the noise generation point X can also be effectively shielded by the first light shielding member 18. That is, since the first light shielding member 18 is away from the noise generation point X, the noise light from the noise generation point X cannot be shielded in a wide angle range. However, the noise light reaching the light receiving optical fiber 17 through the condenser lens 16 among the noise light generated from the noise generation point X is only noise light at an angle almost parallel to the excitation light. Since the first light shielding member 18 is provided on the extended line of the excitation light, noise light that becomes actually an obstacle, can be efficiently shielded in measurement of the Raman scattering light. Since the noise light may be shielded by the first light shielding member 18 having the small area, the Raman scattering light, which is the measurement target, is not greatly shielded by the first light shielding member.

Thus, in the embodiment, it is possible to efficiently shield the noise light by arranging the first light shielding member 18 on the extended line of the excitation light, based on a new insight that strong noise light is generated in a portion irradiated with the excitation light on the surfaces of the first measurement window 14 and the second measurement window 15 at the side of the fuel gas. As the first light shielding member 18 is arranged, the forward Raman scattering light and the backward Raman scattering light having a high intensity are collected and guided to the spectral calculation means 21, and the noise light can be shielded without greatly shielding the Raman scattering light. Accordingly, it is possible to measure the Raman scattering light with a high SN ratio and to shorten time necessary for measurement. As a result, it is possible to calculate the composition and the calorific value of the sample fluid with a high response.

Next, FIG. 4C shows a case in which the second light shielding member 19 is provided in addition to the first light shielding member 18. As shown in FIG. 4C, the second light shielding member 19 is provided on the extended line of the excitation light on the side of the light receiving optical fiber 17 in comparison with the first light shielding member 18. Further, as described above, the second light shielding member 19 is arranged so as to have the same outline with the first light shielding member 18 when viewed from the measurement point A. For this reason, the second light shielding member 19 does not shield the Raman scattering light that is generated at the measurement point A and directed to the condenser lens 16, in a wider range than that in which the first light shielding member 18 shields the light.

Also, in the second light shielding member 19, it is possible to further reduce the noise light from the noise generation point X. As described above, noise light actually incident on the light receiving optical fiber 17 through the condenser lens 16 among the noise light from the noise generation point X is shielded by the first light shielding member 18. However, noise light having a slightly larger angle than noise light shielded by the first light shielding member 18 is likely to reach the vicinity of the light receiving optical fiber 17 and adversely affect the measurement. The second light shielding member 19 shields this noise light without newly shielding the Raman scattering light that is the measurement target, thereby more reliably preventing the noise light from the noise generation point X from being incident on the light receiving optical fiber 17. Accordingly, it is possible to measure the Raman scattering light with a higher SN ratio and to shorten time necessary for measurement. As a result, it is possible to calculate the composition and the calorific value of the sample fluid with a high response.

Further, it is also important to reduce areas of noise light generated from the first measurement window 14 and the second measurement window 15 in performing noise removal. The excitation light is incident on the surface of the second measurement window 15 to be focused such that portions of the first measurement window 14 and the second measurement window 15 irradiated with the excitation light are minimized. Accordingly, the noise light can be more efficiently shielded by the first light shielding member 18 and the second light shielding member 19. As a result, it is possible to measure the Raman scattering light with a high SN ratio.

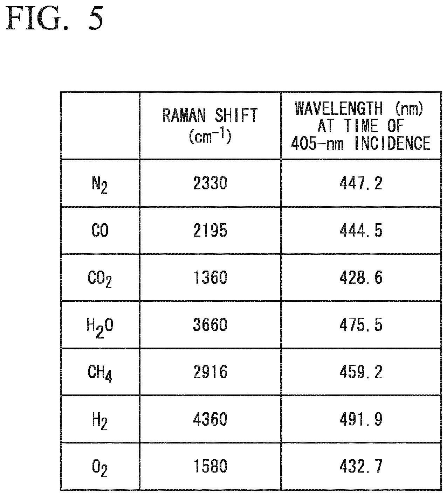

Next, a mechanism for calculating a composition and a calorific value of the fuel gas will be described in detail. FIG. 5 is a graph showing a Raman shift amount and a Raman scattering light wavelength when excitation light having a certain wavelength is incident on components of the fuel gas. As shown in FIG. 5, components contained in the fuel gas can be recognized from the Raman shift amount and concentrations of the components can be obtained from the Raman scattering light intensity of each wavelength.

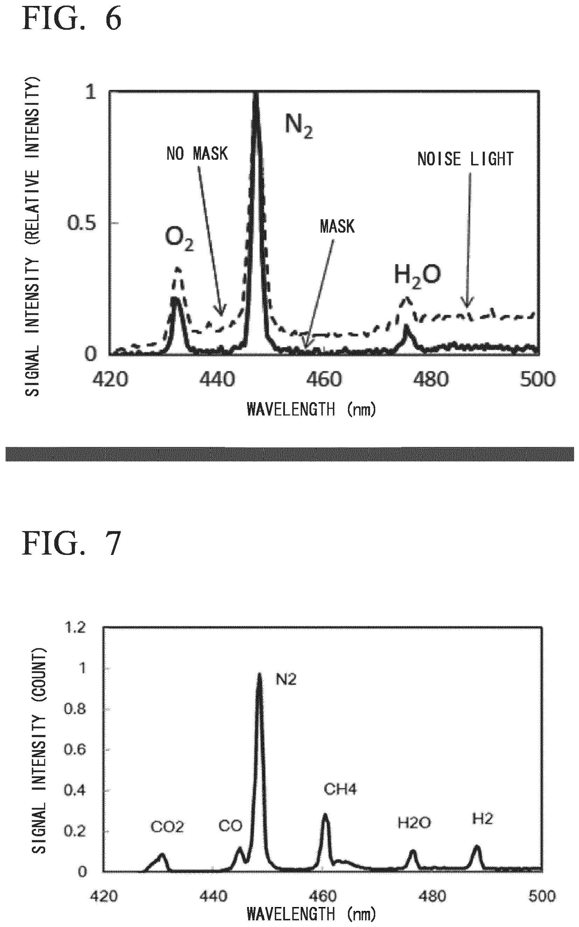

FIG. 6 is a diagram showing a comparison of a result of measuring Raman scattering light between a case in which the first light shielding member 18 and the second light shielding member 19 are provided and a case in which the first light shielding member 18 and the second light shielding member 19 are not provided, in which 405 nm excitation light is applied when air is introduced into the casing 11. Raman scattering light of nitrogen (N₂: 447.2 nm), oxygen (O₂: 432.7 nm), and water vapor (H₂O: 475.5 nm) that are components in the air can be confirmed. When the first light shielding member 18 and the second light shielding member 19 are not provided, noise light other than the wavelengths of the Raman scattering light is detected. That is, as the first light shielding member 18 and the second light shielding member 19 are provided, it is possible to reduce the noise light and realize measurement with good accuracy, as can be confirmed.

Next, a method of detecting the calorific value of the fuel gas and a method of calculating the calorific value of the fuel gas will be described.

The Raman scattering light is generated by applying the excitation light to the fuel gas. The Raman scattering light is scattering light that causes a different wavelength according to vibrational energy specific to each component in the fuel gas. As a result, a Raman shift amount that is a difference between the wavelength of the excitation light and the wavelength of the Raman scattering light is specific to each component, as is known.

When the first measurement window 14 and the second measurement window 15 are contaminated, the intensity of the Raman scattering light having each wavelength transmitted by the light receiving optical fiber 17 is reduced. In order to correct an influence of the contamination, it is well known that relative values ICO/IN₂, ICO₂/IN₂, IH₂O/IN₂, IH₂/IN₂, and ICH₄/IN₂ which are ratios of the intensities of the Raman scattering light of the other components with reference to IN2, which is a Raman scattering light intensity of, for example, nitrogen (N₂), which is a main component of a mixed gas are used. Accordingly, it is possible to reduce the influence of uncleanness of the second measurement window 15 for the Raman scattering light.

FIG. 7 shows an example of a measurement result when excitation light having a 405 nm wavelength is incident as incident light on a fuel gas containing carbon dioxide (CO₂), nitrogen (N₂), carbon monoxide (CO), methane (CH₄), water vapor (H₂O), and hydrogen (H₂). In FIG. 7, a horizontal axis indicates the wavelength of the Raman scattering light of each component, and a vertical axis indicates a relative signal intensity obtained by normalizing each component with the intensity IN₂ of the Raman scattering light of the nitrogen component.

A calorific value of the fuel gas is known to be calculated using the relative signal intensity of the wavelength of the Raman scattering light of each component and a mole fraction of the component.

Equation (1) is an example of an equation for obtaining a higher calorific value (HHV) of the fuel gas when the fuel gas contains the above components. Further, Equation (2) is an example of an equation for obtaining a lower calorific value (LHV) of the fuel gas.
[Equation 1] $HHV = 3020 \times CCO + 3050 \times {CH}_{2} + 9520 \times {CCH}_{4}$ [Equation 2] $LHV = 3020 \times CCO + 2570 \times {CH}_{2} + 8550 \times {CCH}_{4}$

Further, the HHV denotes a calorific value (kcal/m³N) including condensation heat of moisture in the fuel gas and moisture generated by combustion as a calorific value. The LHV denotes a calorific value (kcal/m³N) in the fuel gas that does not include the condensation heat. Further, CN₂, CCO, CCO₂, CH₂O, CH₂, and CCH₄ denote mole fractions of components N₂, CO, CO₂, H₂O, H₂, and CH₄ obtained using Equations (3) to (8) shown below, respectively. Further, in the following Equations (3) to (8), α is a calibration constant of each component.
[Equation 3] ${CN}_{2} = \frac{1}{1 + αCO ⋅ \frac{ICO}{{IN}_{2}} + {αCO}_{2} ⋅ \frac{{ICO}_{2}}{{IN}_{2}} + {αH}_{2} O ⋅ \frac{{IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$ [Equation 4] $CCO = \frac{αCO ⋅ \frac{ICO}{{IN}_{2}}}{1 + αCO ⋅ \frac{ICO}{{IN}_{2}} + {αCO}_{2} ⋅ \frac{{ICO}_{2}}{{IN}_{2}} + {αH}_{2} O ⋅ \frac{{IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$ [Equation 5] ${CCO}_{2} = \frac{{αCO}_{2} ⋅ \frac{{ICO}_{2}}{{IN}_{2}}}{1 + αCO ⋅ \frac{ICO}{{IN}_{2}} + {αCO}_{2} ⋅ \frac{{ICO}_{2}}{{IN}_{2}} + {αH}_{2} O ⋅ \frac{{IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$
[Equation 6] ${CH}_{2} O = \frac{{αH}_{2} O ⋅ \frac{{IH}_{2} O}{{IN}_{2}}}{1 + αCO ⋅ \frac{ICO}{{IN}_{2}} + {αCO}_{2} ⋅ \frac{{ICO}_{2}}{{IN}_{2}} + \frac{{αH}_{2} O ⋅ {IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$ [Equation 7] ${CH}_{2} = \frac{{αH}_{2} ⋅ \frac{{IH}_{2}}{{IN}_{2}}}{1 + αCO ⋅ \frac{ICO}{{IN}_{2}} + {αCO}_{2} ⋅ \frac{{ICO}_{2}}{{IN}_{2}} + {αH}_{2} O ⋅ \frac{{IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$ [Equation 8] ${CCH}_{4} = \frac{{αCH}_{4} ⋅ \frac{{ICH}_{4}}{{IN}_{2}}}{1 + αCO ⋅ \frac{ICO}{{IN}_{2}} + {αCO}_{2} ⋅ \frac{{ICO}_{2}}{{IN}_{2}} + {αH}_{2} O ⋅ \frac{{IH}_{2} O}{{IN}_{2}} + {αH}_{2} ⋅ \frac{{IH}_{2}}{{IN}_{2}} + {αCH}_{4} ⋅ \frac{{ICH}_{4}}{{IN}_{2}}}$

The relative intensity values ICO/IN₂, ICO₂/IN₂, IH₂O/IN₂, IH₂/IN₂, and ICH₄/IN₂ with respect to the nitrogen component IN₂ are calculated from intensities of the Raman scattering light derived from the components N₂, CO, CO₂, H₂O, H₂, and CH₄ in the fuel gas divided by the spectral calculation means 21. Further, the spectral calculation means 21 calculates the calorific value HHV (or LHV) of the fuel gas using the calculated relative intensity values ICO/IN₂, ICO₂/IN₂, IH₂O/IN₂, IH₂/IN₂, and ICH₄/IN₂ of the components and Equations (1) to (8) described above. Thus, the calorific value HHV (or LHV) of the fuel gas guided to the gas turbine 2 (see FIG. 1) is calculated.

It is possible to know the calorific value of the fuel gas in a short amount of time by measuring the calorific value of the fuel gas using the calorific value measurement device according to the embodiment.

Information on the obtained calorific value of the fuel gas is sent to the control device 7 configured to control the operation of the power plant. For example, when the calorific value of the fuel gas is lower than a predetermined value, the control device 7 mixes the fuel gas with a COG as appropriate to increase the calorific value of the fuel gas or changes a control setting value of the gas turbine 2 to a value suitable for operation with a fuel gas having a low calorific value. Accordingly, excessive supply of a fuel gas having a high calorific value among fuel gases supplied to the combustor can be controlled. Alternatively, the calorific value may be controlled using only a fuel gas having a low calorific value without using the fuel gas having the high calorific value. Accordingly, it is possible to reduce an operation cost of the BFG-fired combined cycle power plant (gas-fired power plant) 1.

While the first embodiment of the present invention has been described above, various modifications may be made without departing from the scope of the present invention as defined by the claims.

For example, the example in which the second light shielding member 19 is provided has been shown in the first embodiment. However, it is possible to achieve a sufficient noise light removal effect without providing the second light shielding member 19 and obtain a device having a simpler configuration.

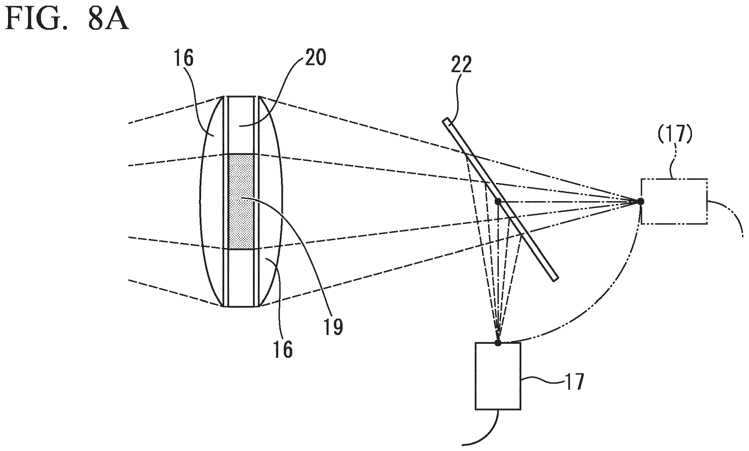

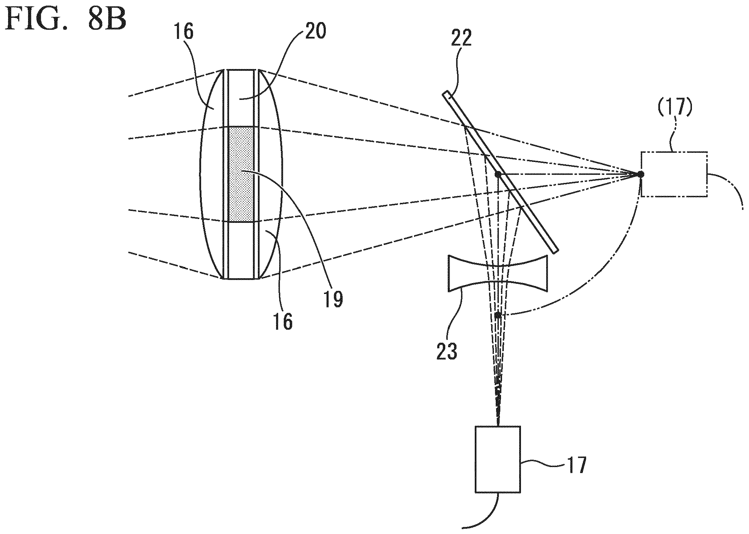

Further, in the embodiment, the example in which the light receiving optical fiber 17 is provided coaxially with an extended line of the excitation light has been shown. However, it is not limited thereto. The light receiving optical fiber 17 may be installed so that a focus of the Raman scattering light incident on the light receiving optical fiber 17 is located on the light-receiving surface of the light receiving optical fiber 17. Specifically, for example, a light turning member 22, such as a mirror or a prism, may be installed between the condenser lens 16 and the light receiving optical fiber 17 on the extended line of the excitation light, as shown in FIG. 8A. Accordingly, the light receiving optical fiber 17 may not be provided coaxially on the extended line of the excitation light by turning an incidence direction of the Raman scattering light. Further, for example, a concave lens 23 or a convex lens may be provided to change a distance from the condenser lens 16 to a focus position in which the light receiving optical fiber 17 is provided, after the Raman scattering light is turned by the light turning member 22, as shown in FIG. 8B. According to this configuration, it is possible to increase the flexibility of the position in which the light receiving optical fiber 17 is installed.

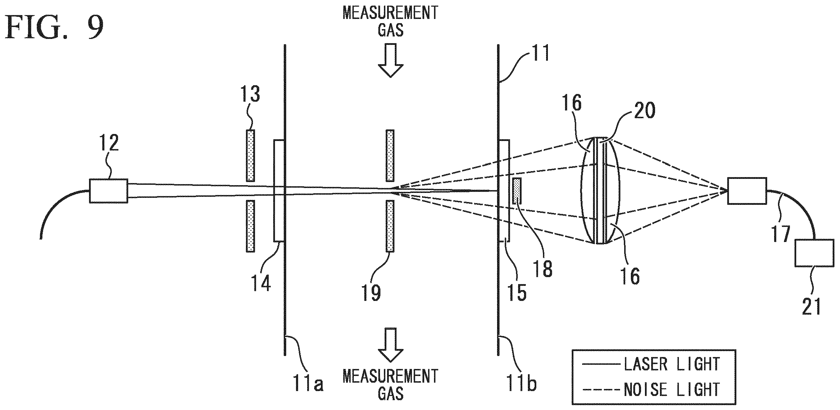

Next, a calorific value measurement device according to a second embodiment of the present invention will be described with reference to FIG. 9. A description of the same parts as those in the first embodiment will be omitted.

The calorific value measurement device according to the second embodiment of the present invention is an example in which the first light shielding member 18 and the second light shielding member 19 are arranged on the optical path of the excitation light or the extended line thereof, i.e., installed in the rear of the second measurement window 15 (the first light shielding member 18) and between the first measurement window 14 and the second measurement window 15 (the second light shielding member 19), as shown in FIG. 9. The second light shielding member 19 has a light shielding area coaxial with the optical path of the excitation light and shields portions other than the optical path of the excitation light to remove noise light from the first measurement window 14. On the other hand, the first light shielding member 18 is a member that has a light shielding area coaxial with the optical path of the excitation light and removes noise light from the second measurement window 15. With this configuration, it is possible to obtain the same noise light removal effect as the configuration of the measurement unit of the first embodiment shown in FIG. 3.

While the second embodiment of the present invention has been described above, various modifications may be made without departing from the scope of the present invention as defined by the claims.

For example, the two light shielding members are provided in the second embodiment. However, three light shielding members may be provided by adding the second light shielding member 19 of the first embodiment.

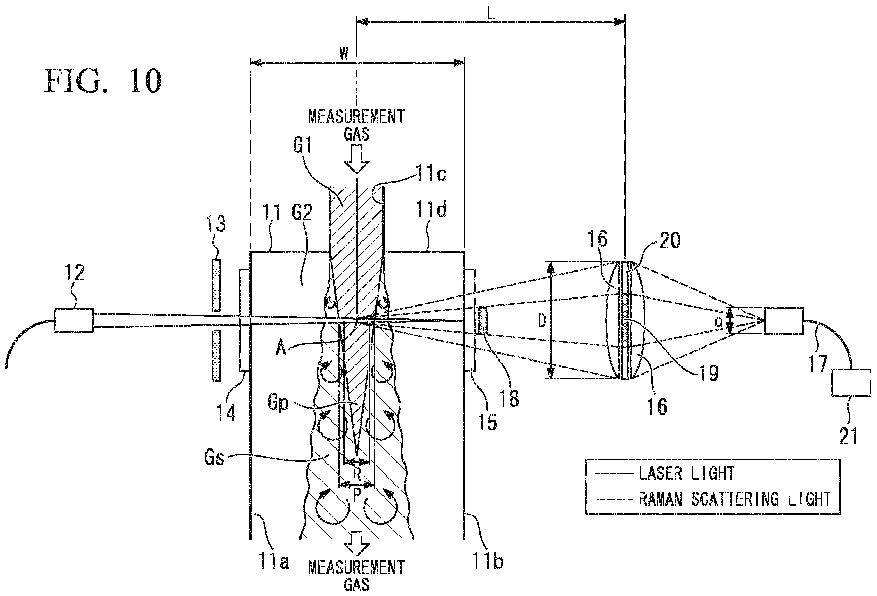

Next, a calorific value measurement device according to a third embodiment of the present invention will be described with reference to FIG. 10. A description of the same parts as those in the first embodiment will be omitted.

The calorific value measurement device according to the third embodiment of the present invention is an example in which a supply means for supplying a fuel gas G1 as a sample fluid to an inlet through which the fuel gas G1 is introduced into a casing 11, is included, as shown in FIG. 10. The supply means includes an injection hole 11c through which the fuel gas G1 is injected from the inlet; a sidewall 11d that couples the injection hole 11c to the casing 11; and a supply part (not shown) that supplies the fuel gas G1 to the injection hole 11c at a desired flow rate and pressure. The injection hole 11c is a straight pipe that has a circular shape in cross-section and has a predetermined flow path cross-sectional area. The injection hole 11c is provided in a central portion of the casing 11 when viewed in a flow direction of the fuel gas G1. The sidewall 11d is provided in a flat plate shape between a downstream end of the injection hole 11c and upstream ends of sidewalls 11a and 11b, and coupled perpendicularly to the injection hole 11c and the sidewalls 11a and 11b.

Further, a light transmitting optical fiber 12, a diaphragm 13, a first measurement window 14, a second measurement window 15, a condenser lens 16, a light receiving optical fiber 17, a first light shielding member 18, a second light shielding member 19, and a filter 20 are provided so that a measurement point A is located near the downstream side of the injection hole 11c and the sidewall 11d. In this case, the supply means including the injection hole 11c through which the fuel gas G1 is injected, the sidewall 11d, and a supply part (not shown) is configured so as to include a measurement point A between the first measurement window 14 and the second measurement window 15 (within a range of a distance W) and to have a potential core part Gp, which will be described later. Specifically, the supply means is configured so that the potential core part Gp of the fuel gas G1 injected from the supply means includes the measurement point A, by adjusting a supply flow rate or pressure of the fuel gas G1 using the supply part and by setting layouts or shapes of the injection hole 11c and the sidewall 11d.

Next, an operation of the calorific value measurement device according to the third embodiment of the present invention will be described.

When a new fuel gas G1 is supplied to the inlet of the casing 11, the fuel gas G1 is injected from the injection hole 11c into the casing 11. The injected fuel gas G1 becomes a jet with a certain flow velocity and flows downstream toward an outlet of the casing 11. On the other hand, a fuel gas G2, which is a part of the fuel gas already injected into the casing 11 and does not flow to the downstream side, is left in the casing 11.

Accordingly, when the fuel gas G1 having a higher flow velocity than the fuel gas G2 is injected, shear force is generated due to a difference in the flow velocity between the fuel gas G1 and the fuel gas G2. Accordingly, a shear layer Gs in which the fluid is in an unstable state is formed on a boundary surface between the fuel gas G1 and the fuel gas G2. In the shear layer Gs, the fuel gas G1 and the fuel gas G2 are in an unsteady state in which the fuel gas G1 and the fuel gas G2 are gradually mixed toward the downstream side while forming a vortex. Accordingly, a flow velocity of the fuel gas in the shear layer Gs is different from the flow velocity of the fuel gas G1 immediately after the injection, and normally, the flow velocity gradually becomes low. Further, the shear layer Gs has a divergent shape in which its area gradually increases as the fuel gas G1 and the fuel gas G2 are mixed and flow downstream.

On the other hand, the shear force caused by the flow velocity difference is generated in the boundary surface between the fuel gas G1 and the fuel gas G2, but an influence of the shear force becomes smaller at a position closer to an outlet of the injection hole 11c. Accordingly, up to a certain distance after the injection, the jet of the fuel gas G1 is in a stable state without being affected by the shear force and forms a steady state area, a so-called potential core part Gp, in which a flow velocity immediately after the injection is uniformly conserved. Further, an area of the shear layer Gs gradually increases toward the downstream side, while an area of the potential core part Gp gradually decreases. That is, the potential core part Gp has a tapered shape toward the downstream side. In the embodiment, the shape is substantially a cone shape. Further, a distance over which the potential core part Gp is formed in a flow direction of the jet is changed with, for example, flow velocities or densities of the fuel gas G1 and the fuel gas G2.

Further, since the calorific value of the supplied fuel gas is not always constant, the calorific values of the fuel gas G1 and the fuel gas G2 are not always the same. Accordingly, the shear layer Gs becomes an area that is in an unsteady state in which a fuel gas flows, the calorific value of the fuel gas being gradually changed as the fuel gas G1 and the fuel gas G2 are mixed due to the vortex formed by the shear force. Further, the fuel gas in the shear layer Gs has a calorific value different from the fuel gas G1 to be supplied to the gas turbine 2. Accordingly, from the viewpoint of suppressing the output variation of the gas turbine 2, it is desirable to measure the calorific value of the fuel gas in the potential core part Gp rather than to measure the calorific value of the fuel gas in the shear layer Gs. In the embodiment, the device is configured in such a manner that the calorific value of the fuel gas in the potential core part Gp can be measured.

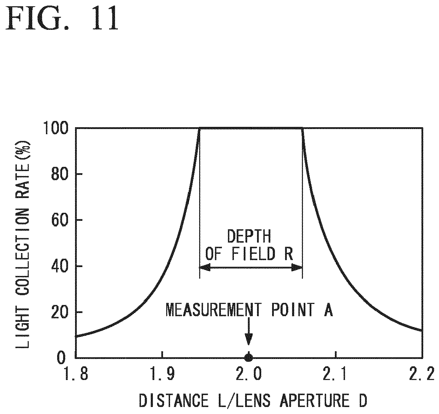

Here, as described above, the Raman scattering light collected on the light receiving optical fiber 17 is not only the light generated from the measurement point A, but Raman scattering light generated in positions near the measurement point A on the optical path of the excitation light is also collected on the light receiving optical fiber 17 at a certain percentage. In this regard, a relationship between a position on the optical path of the excitation light and the light collection rate of the Raman scattering light generated at the position will be described with reference to FIGS. 10 and 11.

When a distance between the measurement point A on an optical path of the excitation light (incidence direction) and the condenser lens 16 is L and the aperture of the condenser lens 16 is D as shown in FIG. 10, a relationship between a light collection rate of the Raman scattering light collected by the condenser lens 16 and detected by the light receiving optical fiber 17 (a vertical axis in FIG. 11) and the distance L non-dimensionalized with the aperture D (a horizontal axis in FIG. 11) is a relationship as shown in FIG. 11. Here, the light collection rate of the Raman scattering light is a percentage of light geometric-optically reaching the light receiving optical fiber 17, of the Raman scattering light generated at any position and incident on the condenser lens 16.

Referring to FIG. 11, the light collection rate is 100% in a specific range including the measurement point A (a range in which L/D is from about 1.93 to about 2.07 in the case of FIG. 11). In this disclosure, this range including the measurement point A on the optical path of the excitation light, which is a range in which all light emitted from the range and passing through the condenser lens 16 is geometric-optically condensed on the light receiving optical fiber 17, is referred to as a "depth of field R."

On the other hand, not all of the Raman scattering light generated outside a range of the depth of field R is collected on the light receiving optical fiber 17 even if they pass through the condenser lens 16. Accordingly, it can be confirmed that the light collection rate rapidly decreases in a position away from the depth of field R.

Since the light collection rate has such a distribution, most of light detected in the light receiving optical fiber 17 is made up by the Raman scattering light emitted from the depth of field R.

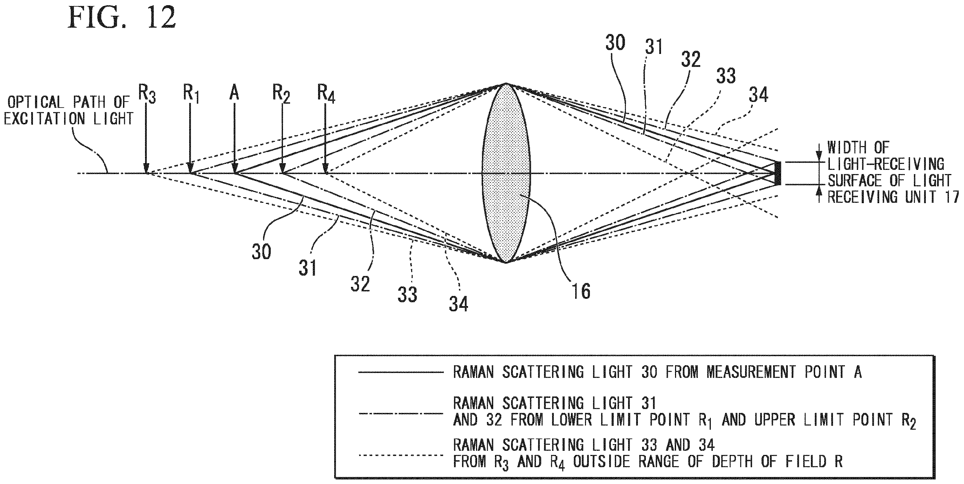

Here, a relationship between the range of the depth of field R and the light collection rate of the Raman scattering light in the light receiving optical fiber 17 will be described with reference to FIG. 12.

An optical path of the Raman scattering light 30 emitted from the measurement point A on the optical path of the excitation light, which is included in the range of the depth of field R, is indicated by a solid line. Since the Raman scattering light 30 from the measurement point A is collected by the condenser lens 16 and focused on a light-receiving surface of the light receiving optical fiber 17, the entire Raman scattering light 30 is collected on the light receiving optical fiber 17. That is, the light collection rate is 100%. Further, in FIG. 12, the condenser lens 16 consisting of two plano-convex lenses is simplified and shown as one lens and the measurement windows 14 and 15, the light shielding members 18 and 19, the filter 20 and the like other than the condenser lens 16 are not shown for convenience.

Next, an optical path of Raman scattering light 31 emitted from a lower limit point R₁ in the range of the depth of field R at the side of the light transmitting optical fiber 12 relative to the measurement point A (a left side in FIG. 12) on the optical path of the excitation light is indicated by a dot and dash line. The Raman scattering light 31 from the lower limit point R₁ is collected by the condenser lens 16 and focused slightly at a front side (the left side in FIG. 12) of the light-receiving surface of the light receiving optical fiber 17. However, an extent of spread of the Raman scattering light 31 in a direction perpendicular to the optical path of the excitation light at a position of the light-receiving surface of the light receiving optical fiber 17 is relatively small, and a width of the spread is substantially the same as a width of the light-receiving surface of the light receiving optical fiber 17. Accordingly, the lower limit point R₁ is a lower limit position at which the entire Raman scattering light 31 from the lower limit point is condensed on the light receiving optical fiber 17, that is, at which the light collection rate is 100%.

Similarly, an optical path of Raman scattering light 32 emitted from an upper limit point R2 in the range of the depth of field R at the side of the light receiving optical fiber 17 relative to the measurement point A on the optical path of the excitation light (at a right side in FIG. 12) is indicated by a dot and dash line. The Raman scattering light 32 from the upper limit point R2 is condensed by the condenser lens 16 and focused slightly at the back side of the light-receiving surface of the light receiving optical fiber 17 (right side in FIG. 12). However, an extent of spread of the Raman scattering light 32 in the direction perpendicular to the optical path of the excitation light at the position of the light-receiving surface of the light receiving optical fiber 17 is relatively small, and a width of the spread is substantially the same as the width of the light-receiving surface of the light receiving optical fiber 17. Accordingly, the upper limit point R2 is an upper limit position at which the entire Raman scattering light 32 from the upper limit point is collected on the light receiving optical fiber 17, that is, at which the light collection rate is 100%.

Further, Raman scattering light (whose optical paths are not shown) emitted from between the measurement point A and the lower limit point R₁ and between the measurement point A and the upper limit point R2, which are included in the range of the depth of field R and on the optical path of the excitation light, is also collected by the condenser lens 16, similar to the Raman scattering light 31 and 32. In this case, the Raman scattering light is focused at positions closer to the light-receiving surface of the light receiving optical fiber 17 as compared to the Raman scattering light 31 and 32. Accordingly, an extent of spread of the Raman scattering light in the direction perpendicular to the optical path of the excitation light at the position of the light-receiving surface of the light receiving optical fiber 17 is smaller than that of the Raman scattering light 31 and 32, and a width of the spread is smaller than the width of the light-receiving surface of the light receiving optical fiber 17. Accordingly, the entire Raman scattering light from between the measurement point A and the lower limit point R₁ and between the measurement point A and the upper limit point R2 is collected on the light receiving optical fiber 17, that is, the light collection rate is 100%.

On the other hand, Raman scattering light emitted from outside of the range of the depth of field R that is the side of the light transmitting optical fiber 12 relative to the lower limit point R₁ on the optical path of the excitation light (the left side in FIG. 12) and the side of the light receiving optical fiber 17 relative to the upper limit point R₂ on the optical path of the excitation light (the right side in FIG. 12) is similarly collected by the condenser lens 16. For example, optical paths for Raman scattering light 33 and 34 emitted from points R₃ and R₄ located outside the range of the depth of field R are indicated by dotted lines. However, in this case, the Raman scattering light 33 and 34 is focused at positions at the further front side and the further back side from the Raman scattering light 31 and 32, i.e., at positions further distant from the light-receiving surface of the light receiving optical fiber 17. Accordingly, an extent of spread of the Raman scattering light 33 and 34 in a direction perpendicular to the optical path of the excitation light at the position of the light-receiving surface of the light receiving optical fiber 17 is greater than that of the Raman scattering light 31 and 32, and a width of the spread is larger than the width of the light-receiving surface of the light receiving optical fiber 17. Thus, as the Raman scattering light 33 and 34 spread too wide, only a part of each of the Raman scattering light 33 and 34 is collected on the light-receiving surface of the light receiving optical fiber 17. That is, the light collection rate is less than 100%. Further, with distance from the lower limit point R₁ and the upper limit point R₂ of the range of the depth of field R toward the light transmitting optical fiber 12 (the left side in FIG. 12) and toward the light receiving optical fiber 17 (the right side in FIG. 12) as shown in the graph of FIG. 12, the light collection rate is further degraded, as described above.

Thus, the depth of field R is a range determined based on a geometric-optical relationship between the condenser lens 16 (a Raman scattering light collection optical system) and the light receiving optical fiber 17 on the optical path of the excitation light. Accordingly, if this geometric-optical relationship is maintained, the depth of field R is unchanged and does not depend on a shape and a dimension of the casing 11 or an aspect of a flow of a combustion gas.

Accordingly, if a width P of the potential core part Gp on the optical path of the excitation light is set to be larger than the depth of field R as shown in FIG. 10, a measurement device can be configured so that most of the Raman scattering light incident on a light receiving unit is generated from within the potential core part Gp. Accordingly, measurement of a composition of the fuel gas which was changed due to mixture in the shear layer Gs can be avoided. Accordingly, a calorific value of the fuel gas G1 to be supplied to the gas turbine 2 can be measured and calculated with a high response. Thus, improvement of a response in suppression of output variation of the gas turbine 2 can be achieved.

Further, in the embodiment, the light transmitting optical fiber 12, the diaphragm 13, the first measurement window 14, the second measurement window 15, the condenser lens 16, the light receiving optical fiber 17, the first light shielding member 18, the second light shielding member 19, and the filter 20 are provided so that the measurement point A is located near the downstream side of the injection hole 11c and the sidewall 11d. However, a shape or a dimension of the casing 11 at the downstream side from the measurement point A can be freely changed within a range not influencing the flow at the upstream side and, more specifically, within a range not influencing the width P of the potential core part Gp on the optical path of the excitation light. Further, the casing 11 may have a shape in which the flow path cross-sectional area thereof increases or decreases. Accordingly, it is possible to obtain a small and inexpensive measurement device.

Further, in the embodiment, the injection hole 11c through which the fuel gas G1 is injected is provided so as to have the potential core part Gp including the measurement point A between the first measurement window 14 and the second measurement window 15. Accordingly, an influence of the noise light generated as the first measurement window 14 and the second measurement window 15 polluted with, for example, the fuel gas passing through the measurement area is irradiated with the excitation light can be further reduced. Accordingly, it is possible to further improve measurement accuracy of the Raman scattering light.

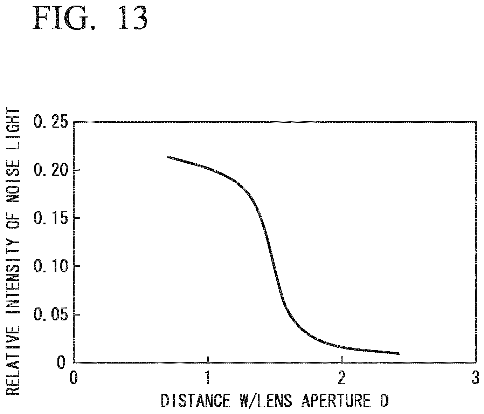

This will be further described with reference to FIG. 13. FIG. 13 is a graph showing a relationship between the distance W between the first measurement window 14 and the second measurement window 15 and a relative intensity of noise light. In FIG. 13, a horizontal axis indicates a value obtained by non-dimensionalizing the distance W between the first measurement window 14 and the second measurement window 15 with the aperture D of the condenser lens 16, and a vertical axis indicates the relative intensity obtained by normalizing noise light ranging from 460 nm to 470 nm with an intensity IN2 of Raman scattering light of a nitrogen component.

Referring to FIG. 13, when the aperture D of the condenser lens 16 is the same, the relative intensity of the noise light increases as the distance W between the first measurement window 14 and the second measurement window 15 decreases. Conversely, the relative intensity of the noise light rapidly decreases near the distance W of 1.5D. Further, it can be confirmed that the relative intensity of the noise light decreases as the distance W increases. That is, since the first measurement window 14 and the second measurement window 15 that generate the noise light move further away from the measurement point A as the distance W between the first measurement window 14 and the second measurement window 15 on the optical path of the excitation light increases, the influence of the noise light on a weak Raman scattering light can be further reduced. Accordingly, it is possible to further improve the measurement accuracy of the Raman scattering light.

Thus, it is possible to further reduce the influence on the Raman scattering light of the noise light generated due to irradiation of the first measurement window 14 and the second measurement window 15 contaminated with the fuel gas, etc. with the excitation light, by arranging the sidewalls 11a, 11b and 11d and the injection hole 11c of the casing 11, the first measurement window 14, the second measurement window 15, the condenser lens 16, and the light receiving optical fiber 17 so that a relationship among the distance W between the first measurement window 14 and the second measurement window 15 on the optical path of the excitation light, the width P of the potential core part Gp of the jet of the fuel gas G1, and the depth of field R is W > P > R as in the embodiment. Accordingly, it is possible to further improve the measurement accuracy of the Raman scattering light.

While the third embodiment of the present invention has been described above, various modifications may be made without departing from the scope of the present invention as defined by the claims.

For example, while in the third embodiment, one injection hole 11c is provided in a central portion of the casing 11 when viewed from the flow direction of the fuel gas G1, the present invention is not limited thereto, and the injection hole 11c may be provided in a portion other than the central portion and two or more injection holes 11c may be provided as long as the width P of the potential core part Gp can be set to include the depth of field R.

Further, while in the embodiment, the injection hole 11c is the straight pipe having a circular shape in cross-section, the injection hole 11c is not limited thereto and may have a cross-sectional shape other than the circular shape in cross-section. Further, the injection hole 11c may not be the straight pipe and, for example, the injection hole 11c may have a shape having a curvature or a shape whose flow path cross-sectional area increases or decreases in the flow direction.

Further, while in the embodiment, the sidewall 11d is provided between the downstream end of the injection hole 11c and upstream ends of the sidewalls 11a and 11b, the present invention is not limited thereto, and the sidewall 11d can be omitted as long as the width P of the potential core part Gp can be set to include the depth of field R. Further, while the sidewall 11d has the flat plate shape, the sidewall 11d is not limited thereto and may have a shape other than the flat plate.

Further, while in the embodiment, the sidewall 11d is coupled perpendicularly to the injection hole 11c and the sidewalls 11a and 11b, the present invention is not limited thereto and the sidewall 11d may be inclined to at least one of the injection hole 11c and the sidewalls 11a and 11b. In other words, the injection hole 11c may be inclined with respect to the sidewall 11d.

Further, while in the embodiment the measurement point A is located near the downstream side of the injection hole 11c and the sidewall 11d, the present invention is not limited thereto and the measurement point A may not be located near the downstream side of the injection hole 11c and the sidewall 11d as long as the width P of the potential core part Gp can be set to include the depth of field R.

According to the above description, it is possible to rapidly measure the calorific value of the fuel gas supplied to the power plant. Accordingly, control of the calorific value of the fuel gas supplied to the power plant can be rapidly performed, and excessive supply of a high calorific value fuel gas can be suppressed. Thus, operating costs of the power plant can be reduced.

A description has been so far given for preferred embodiments of the present invention, but the present invention shall not be limited thereto. The present invention shall not be restricted to the above description but will be restricted only by the scope of the attached claims.

## Claims

1. A fluid composition analysis apparatus comprising:
a light source (12) configured to apply excitation light to a sample fluid at a measurement position (A);
a light receiving unit (17) configured to receive and disperse Raman scattering light generated from the sample fluid irradiated with the excitation light;
a Raman scattering light collection optical system (16) arranged on an optical path of the excitation light or on an extended line of the excitation light and configured to collect the Raman scattering light generated at the measurement position (A) and to cause the Raman scattering light to be incident on the light receiving unit (17);
a calculation unit (21) configured to calculate a composition of the sample fluid based on an output of the light receiving unit (17);
a light shielding member (18, 19) arranged on the optical path of the excitation light or on the extended line of the excitation light;
a first measurement window (14) arranged on the optical path of the excitation light and configured to guide the excitation light to an area in which the sample fluid flows; and
a second measurement window (15) arranged on the optical path of the excitation light or on the extended line of the excitation light and configured to guide the Raman scattering light generated at the measurement position (A) to the Raman scattering light collection optical system (16) arranged outside the area in which the sample fluid flows, **characterized in that**
the light shielding member (18, 19) includes:
a first light shielding member (18) arranged on the side of the light receiving unit (17) with respect to a surface of the second measurement window (15) exposed to the sample fluid; and
a second light shielding member (19) arranged on the side of the light receiving unit (17) with respect to the first light shielding member (18) and having an outline defining the edge of the light blocking area coinciding with the outline of the first light shielding member (18), when viewed from the measurement point (A).

2. The fluid composition analysis apparatus according to claim 1, wherein
the light receiving unit (17) is arranged on an extended line of the excitation light.

3. The fluid composition analysis apparatus according to claim 1 or 2, further comprising:
a supply means (11) configured to inject the sample fluid (G1) so as to from a potential core part (Gp) of the sample fluid region that is between the first measurement window (14) and the second measurement window (15) and includes the measurement position, wherein
a spatial region corresponding to the potential core part (Gp) on the optical path at least covers a spatial region of the depth of field of the light collection optical system, the spatial region of the depth of field is a range (R) on the optical path of the excitation light including the measurement position (A), the range (R) being a range in which all light passing through the Raman scattering light collection optical system (16) among light emitted from the range (R) is geometric-optically incident on the light receiving unit (17).

4. The fluid composition analysis apparatus according to any one of claims 1 to 3, wherein:
in the light source (12), a focus of the excitation light is located on the surface of the second measurement window exposed to the sample fluid.

5. The fluid composition analysis apparatus according to any one of claims 1 to 4, further comprising:
a reflector provided perpendicularly to the optical path of the excitation light on the optical path and configured to reflect the excitation light.

6. A calorific value measurement device (6) comprising:
the fluid composition analysis apparatus according to any one of claims 1 to 5; and
a calorific value calculation apparatus configured to calculate a calorific value of the sample fluid based on information on a composition of the sample fluid output by the fluid composition analysis apparatus.

7. A power plant (1) that is operated with a fuel gas as a fuel, the power plant comprising:
the calorific value measurement device (6) according to claim 6; and
a control device (7) configured to control operation of the power plant (1) based on information on the calorific value of the fuel gas output by the calorific value measurement device (6), wherein
at least part of the fuel gas is guided as the sample fluid (G1) to the calorific value measurement device (6).

## Patentansprüche

1. Analysevorrichtung für Fluidzusammensetzung, umfassend:
eine Lichtquelle (12), die dazu eingerichtet ist, Anregungslicht auf ein Probenfluid an einer Messposition (A) aufzubringen;
eine Lichtempfangseinheit (17), die dazu eingerichtet ist, Raman-Streulicht zu empfangen und zu verteilen, das aus dem mit dem Anregungslicht bestrahlten Probenfluid erzeugt wird;
ein optisches Raman-Streulichtsammelsystem (16), das auf einem optischen Weg des Anregungslichts oder auf einer verlängerten Linie des Anregungslichts angeordnet ist und dazu eingerichtet ist, das an der Messposition (A) erzeugte Raman-Streulicht zu sammeln und zu bewirken, dass das Raman-Streulicht auf die Lichtempfangseinheit (17) trifft;
eine Berechnungseinheit (21), die dazu eingerichtet ist, eine Zusammensetzung des Probenfluids basierend auf einer Ausagbe der Lichtempfangseinheit (17) zu berechnen;
ein Lichtabschirmelement (18, 19), das auf dem optischen Weg des Anregungslichts oder auf der verlängerten Linie des Anregungslichts angeordnet ist;
ein erstes Messfenster (14), das auf dem optischen Weg des Anregungslichts angeordnet ist und dazu eingerichtet ist, das Anregungslicht zu einem Bereich zu leiten, in dem das Probenfluid fließt; und
ein zweites Messfenster (15), das auf dem optischen Weg des Anregungslichts oder auf der verlängerten Linie des Anregungslichts angeordnet ist und dazu eingerichtet ist, das an der Messposition (A) erzeugte Raman-Streulicht zu dem optischen Raman-Streulichtsammelsystem (16) zu leiten, das außerhalb des Bereichs angeordnet ist, in dem das Probenfluid fließt, **dadurch gekennzeichnet, dass**
das Lichtabschirmelement (18, 19) beinhaltet:
ein erstes Lichtabschirmelement (18), das auf der Seite der Lichtempfangseinheit (17) in Bezug auf eine Oberfläche des zweiten Messfensters (15) angeordnet ist, die dem Probenfluid ausgesetzt ist; und
ein zweites Lichtabschirmelement (19), das auf der Seite der Lichtempfangseinheit (17) in Bezug auf das erste Lichtabschirmelement (18) angeordnet ist und einen Umriss aufweist, der den Rand des Lichtabschirmbereichs definiert, der mit dem Umriss des ersten Lichtabschirmelements (18) zusammenfällt, von dem Messpunkt (A) aus betrachtet.

2. Die Analysevorrichtung für die Fluidzusammensetzung nach Anspruch 1, wobei
die Lichtempfangseinheit (17) auf einer verlängerten Linie des Anregungslichts angeordnet ist.

3. Die Analysevorrichtung für die Fluidzusammensetzung nach Anspruch 1 oder 2, ferner umfassend:
ein Zuführmittel (11), das dazu eingerichtet ist, das Probenfluid (G1) so einzuspritzen, um einen potenziellen Kernteil (Gp) des Probenfluidbereichs zu bilden, der sich zwischen dem ersten Messfenster (14) und dem zweiten Messfenster (15) befindet und die Messposition beinhaltet, wobei
ein räumlicher Bereich, der dem potentiellen Kernteil (Gp) auf dem optischen Weg entspricht, mindestens einen räumlichen Bereich der Schärfentiefe des optischen Lichtsammelsystems abdeckt, der räumliche Bereich der Schärfentiefe ein Bereich (R) auf dem optischen Weg des Anregungslichts einschließlich der Messposition (A) ist, wobei der Bereich (R) ein Bereich ist, in dem alles Licht, das durch das optische Raman-Streulichtsammelsystem (16) unter dem von dem Bereich (R) emittierten Licht hindurchgeht, geometrisch-optisch auf die Lichtempfangseinheit (17) trifft.

4. Die Analysevorrichtung für die Fluidzusammensetzung nach einem der Ansprüche 1 bis 3, wobei:
in der Lichtquelle (12) ein Fokus des Anregungslichts auf der Oberfläche des zweiten Messfensters angeordnet ist, das der Probenflüssigkeit ausgesetzt ist.

5. Analysevorrichtung für die Fluidzusammensetzung nach einem der Ansprüche 1 bis 4, ferner umfassend:
einen Reflektor, der senkrecht zum optischen Weg des Anregungslichts auf dem optischen Weg angeordnet ist und dazu eingerichtet ist, das Anregungslicht zu reflektieren.

6. Brennwert-Messvorrichtung (6), umfassend:
die Analysevorrichtung für die Fluidzusammensetzung nach einem der Ansprüche 1 bis 5; und
eine Brennwert-Berechnungsvorrichtung, die dazu eingerichtet ist, einen Brennwert des Probenfluids basierend auf Informationen über eine Zusammensetzung des Probenfluids zu berechnen, welche durch die Analysevorrichtung für die Fluidzusammensetzung ausgegeben wurde.

7. Kraftwerksanlage (1), die mit einem Brenngas als Brennstoff betrieben wird, wobei die Kraftwerksanlage umfasst:
die Brennwert-Messvorrichtung (6) nach Anspruch 6; und
eine Steuervorrichtung (7), die dazu eingerichtet ist, den Betrieb der Kraftwerksanlage (1) basierend auf Informationen über den Brennwert der Brenngase, die von der Brennwert-Messvorrichtung (6) ausgegebenen wurden zu steuern, wobei
mindestens ein Teil des Brenngases als Probenfluid (G1) zur Brennwert-Messvorrichtung (6) geführt wird.

## Revendications

1. Un appareil d'analyse d'une composition fluide, comprenant :
une source lumineuse (12) configurée pour appliquer une lumière d'excitation à un échantillon de fluide au niveau d'une position de mesure (A) ;
une unité de réception de lumière (17) configurée pour recevoir et/ou disperser la lumière de diffusion Raman générée par l'échantillon de fluide irradié par la lumière d'excitation ;
un système optique de recueil de la lumière de diffusion Raman (16) agencé sur un trajet optique de la lumière d'excitation ou sur une ligne prolongeant la lumière d'excitation, et configuré pour recueillir la lumière de diffusion Raman générée au niveau de la position de mesure (A) et faire en sorte que la lumière de diffusion Raman vienne frapper l'unité de réception de lumière (17) ;
une unité de calcul (21) configurée pour calculer une composition de l'échantillon de fluide en fonction d'une sortie de l'unité de réception de lumière (17) ;
un organe d'occultation de la lumière (18, 19) agencé sur le trajet optique de la lumière d'excitation ou sur la ligne prolongeant la lumière d'excitation ;
une première fenêtre de mesure (14) agencée sur le trajet optique de la lumière d'excitation et configurée pour guider la lumière d'excitation vers une zone dans laquelle s'écoule l'échantillon de fluide ; et
une seconde fenêtre de mesure (15) agencée sur le trajet optique de la lumière d'excitation ou sur la lumière prolongeant la lumière d'excitation, et
configurée pour guider la lumière de diffusion Raman, générée au niveau de la position de mesure (A), vers le système optique de recueil de la lumière de diffusion Raman (16) agencé en-dehors de la zone dans laquelle s'écoule l'échantillon de fluide, **caractérisé en ce que**
l'organe d'occultation de la lumière (18, 19) comprend :
un premier organe d'occultation de la lumière (18) agencé sur le côté de l'unité de réception de lumière (17) par rapport à une surface de la seconde fenêtre de mesure (15) exposée à l'échantillon de fluide ; et
un second organe d'occultation de la lumière (19) agencé sur le côté de l'unité de réception de lumière (17) par rapport au premier organe d'occultation de la lumière (18) et présentant un contour définissant le bord de la surface d'arrêt de la lumière qui coïncide avec le contour du premier organe d'occultation de la lumière (18), lorsqu'il est vu depuis le point de mesure (A).

2. L'appareil d'analyse d'une composition de fluide selon la revendication 1, dans lequel
l'unité de réception de lumière (17) est agencée sur une ligne prolongeant la lumière d'excitation.

3. L'appareil d'analyse d'une composition de fluide selon la revendication 1 ou 2, comprenant en outre :
un moyen d'alimentation (11) configuré pour injecter l'échantillon de fluide (G1) de manière à former une partie principale potentielle (Gp) de la région de l'échantillon de fluide qui est située entre la première fenêtre de mesure (14) et le seconde fenêtre de mesure (15) et qui inclut la position de mesure, dans lequel
une région spatiale correspondant à la partie principale potentielle (Gp) sur le trajet optique couvre au moins une région spatiale de la profondeur de champ du système optique de recueil de la lumière, la région spatiale de la profondeur de champ étant une étendue (R) sur le trajet optique de la lumière d'excitation qui inclut la position de mesure (A), l'étendue (R) étant une étendue dans laquelle toute la lumière traversant le système optique de recueil de la lumière de diffusion Raman (16) faisant partie de la lumière émise depuis l'étendue (R) frappe de façon optiquement géométrique l'unité de réception de lumière (17).

4. L'appareil d'analyse d'une composition de fluide selon l'une des revendications 1 à 3, dans lequel :
dans la source lumineuse (12), un foyer de la lumière d'excitation est situé sur la surface de la seconde fenêtre de mesure exposée à l'échantillon de fluide.

5. L'appareil d'analyse d'une composition de fluide selon l'une des revendications 1 à 4, comprenant en outre :
un réflecteur disposé perpendiculairement au trajet optique de la lumière d'excitation du trajet optique et configuré pour réfléchir la lumière d'excitation.

6. Un dispositif de mesure d'une valeur calorifique (6) comprenant :
l'appareil d'analyse d'une composition de fluide selon l'une des revendications 1 à 5 ; et
un appareil de calcul d'une valeur calorifique configuré pour calculer une valeur calorifique de l'échantillon de fluide en fonction d'informations sur une composition de l'échantillon de fluide délivrées par l'appareil d'analyse d'une composition de fluide.

7. Une centrale électrique (1) qui fonctionne avec un gaz combustible en tant que combustible, la centrale électrique comprenant :
le dispositif de mesure d'une valeur calorifique (6) selon la revendication 6 ; et
un dispositif de contrôle (7) configuré pour contrôler le fonctionnement de la centrale électrique (1) en fonction d'informations sur la valeur calorifique du gaz combustible délivrées par le dispositif de mesure d'une valeur calorifique (6), dans laquelle
au moins une partie du gaz combustible est guidée en tant qu'échantillon de fluide (G1) vers le dispositif de mesure d'une valeur calorifique (6).
